# EUROPEAN PATENT APPLICATION

(11) **EP 4 517 914 A1**
(43) Date of publication of application: **05.03.2025**
(21) Application number: 23193680.8
(22) Date of filing: 28.08.2023
(51) Int. Cl.: H01M 10/42, H01M 10/48, H01M 50/204, H01M 50/284, H01M 50/574, H05K 1/00

(54) **CELL CONTACTING SYSTEM, A BATTERY, A BATTERY SYSTEM AND A METHOD FOR PROVIDING A CELL CONTACTING SYSTEM**

(71) Applicant: Röchling Automotive SE, 68165 Mannheim (DE)
(72) Inventor: Girardi, Saverio, 38123 Trento (IT)
(74) Representative: Ullrich & Naumann PartG mbB

(57) **Abstract**

The invention relates to a cell contacting system (1) for electrically contacting a plurality of battery cells (110) of a battery, comprising a layer structure, said layer structure comprising at least one structural layer (3a, 3b) for providing mechanical stability, and at least one conductive layer (4) adapted to transport electric current from and/or to one or more battery cells, wherein at least one functional layer (5, 6) is provided, said functional layer providing at least one managing function for a battery management system and/or a protection function for said battery management system and/or for the cell contacting system.

## Description

The present invention relates to a cell contacting system for electrically contacting a plurality of battery cells of a battery, comprising a layer structure, said layer structure comprising at least one structural layer for providing mechanical stability, and at least one conductive layer adapted to transport electric current from and/or to one or more battery cells.

The present invention further relates to a battery comprising a cell contacting system.

The present invention further relates to a battery system comprising a battery and a battery management system.

The present invention further relates to a method for providing a cell contacting system.

Electrical cell contacting systems for electrically connecting different cells of a battery are known since many years. For instance, US 10,784,485 B2 discloses a cell contacting system including a signal conductor system with at least one flexible printed circuit, wherein the flexible printed circuit can comprise two flexible insulating films and at least one conductor track that is arranged between the insulating films. One or more sensors can be integrated into the flexible printed circuit and might be arranged between the insulating films. The cell contacting system might comprise one or more sensors to measure the temperature or voltage.

One of the disadvantages is, however, that a large construction space is required. Further, the sensors are separately manufactured and have to be separately integrated. Even further, flexibility in providing functions for a management system are very limited.

An objective of the present invention is therefore to provide a cell contacting system, a battery, a battery system and a method for providing a cell contacting system, which can be easier manufactured, provide a high degree in operation reliability, allow a higher flexibility for a management system and have a reduced weight.

A further objective of the present invention is to provide an alternative cell contacting system, an alternative battery, an alternative battery system and an alternative method for providing a cell contacting system.

In an embodiment, the present invention solves the above-mentioned objectives with a cell contacting system for electrically contacting a plurality of battery cells of a battery, comprising a layer structure, said layer structure comprising at least one structural layer for providing mechanical stability, and at least one conductive layer adapted to transport electric current from and/or to one or more battery cells, characterized in that at least one functional layer is provided, said functional layer providing at least one managing function for a battery management system and/or a protection function for said battery management system and/or for the cell contacting system.

In an embodiment, the present invention solves the above-mentioned objectives with a battery comprising a cell contacting system according to one of the claims 1-12.

In an embodiment, the present invention solves the above-mentioned objectives with a battery system, comprising a battery according to claim 13 and a battery management system connected to said at least one functional layer of the cell contacting system of said battery, preferably wherein said at least one functional layer is used for balancing current from and/or to the battery management system.

In an embodiment, the present invention solves the above-mentioned objectives with a method for providing a cell contacting system according to one of the claims 1-12, wherein at least one of the layers of the layer structure is provided by at least one of printing, lamination, etching, overmoulding, stamping.

One of the advantages that may be achieved is that due to the functional layer, construction space can be reduced while an enhanced flexibility and a high level of integration is achieved. Further, the weight for a cell contacting system can be reduced.

Further features, advantages and preferred embodiments are disclosed or may become apparent in the following.

According to a preferred embodiment, said at least one functional layer comprises at least one sensing element for sensing a physical property, in particular temperature, pressure and/or voltage, and/or a conductive element for conducting electric signals and/or current. This allows an easy integration of sensing elements into the layer structure of the cell contacting system.

According to a further preferred embodiment, said at least one sensing element is connected via a signal conducting line within said at least one functional layer. This enables a reliable connection of the sensing element without having to use separate electric connections or layers for electrically connecting the sensing element. The functional layer itself can also be used as a signal conducting line.

According to a further preferred embodiment, said at least one functional layer comprises dielectric material and/or flame-retardant material and/or flame protection material. This enhances the reliability of operation of the cell contacting system. For instance, the presence of a flame-retardant material and/or flame protection suppresses a destruction of the whole cell contacting system when a high current causes a local heat accumulation. A dielectric material provides a reliable electric shielding of the conductive layer.

According to a further preferred embodiment, said at least one functional layer is adapted to provide fluid channelling, in particular gas channelling. This further enhances the flexibility of the cell contacting system. For instance, the functional layer can provide a cooling of the conductive layer or of the whole cell contacting system when a cooling fluid is provided in said functional layer.

According to a further preferred embodiment, said at least one functional layer is adapted to provide a fuse function, preferably for said at least one conductive layer, preferably comprising an SMD component and/or at least one thinner region within said at least one functional layer. This avoids a current overload of the cell contacting system enhancing the operation reliability.

According to a further preferred embodiment, a top and a bottom layer of the layer structure are provided as structural layers. This enhances the structural integrity of the cell contacting system.

According to a further preferred embodiment, said at least one conductive layer and said at least one functional layer, providing a managing function, in particular a monitoring function, are adjacent layers.

According to a further preferred embodiment, at least one functional layer comprising dielectric material and/or flame-retardant material and/or flame protection material is arranged on top of all other functional layers within the layer structure. This avoids or at least reduces a damage of components above the cell contacting system.

According to a further preferred embodiment, said dielectric material comprises at least one of polypropylene, polyimide, polyethylene terephthalate, polyethylene naphthalate, polycarbonate and/or that said flame-retardant material and/or flame protection material comprises at least one of mica, hydroxide-loaded plastic. One of the advantages is that application flexibility of the cell contacting system is enhanced since the layer structure can be designed according to the requirements of the battery or battery cells or the like.

According to a further preferred embodiment, said at least one conductive layer comprises at least one of copper, aluminum, silver. This provides a reliable transport of electric current.

According to a further preferred embodiment, the thickness of at least one structural layer is at least equal to the thickness of the conductive layer and/or the functional layer, preferably having at least double thickness, preferably at least triple thickness. This enables a reliable structural integrity while avoiding a high construction space.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

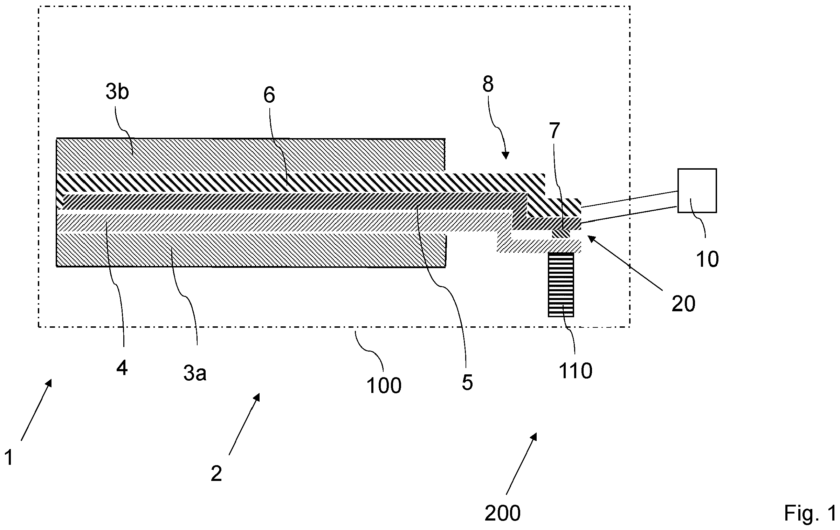

In the drawing
- Fig. 1: shows a battery system according to an embodiment of the present invention.

Figure 1 shows a battery system according to an embodiment of the present invention.

In Figure 1, a battery system 200 is shown, comprising a battery 100 with at least one battery cell 110, a battery management system 10 connected to the battery 100 and a cell contacting system 1. The cell contacting system 1 comprises a layer structure 2, which comprises as bottom layer 3a a structural layer made of plastic. On top of the bottom layer 3a, a conductive layer 4 is provided comprising a metal, for instance copper. The metal layer 4 can be etched on the bottom layer 3a or laminated on top of the bottom layer 3a. On the right side, the conductive layer 4 is connected to a battery cell 110.

On top of the conductive layer 4, a functional layer 5 in form of a signal conducting layer 8 is provided. In the area 20 of the electrical connection between the conductive layer 4 and the battery cell 110, on top of the conductive layer 4, i.e. on the side of the conductive layer 4 facing away from the battery cell 110, a temperature sensing element 7 is provided and connected to the functional layer 5. The functional layer 5 itself is connected to the battery management system 10 for surveillance of the temperature detected by the sensing element 7. On top of said functional layer 5, a further functional layer in form of a dielectric layer 6 is provided comprising also flame-retardant material. On top of the dielectric layer 6, a second structural layer 3b is provided.

The conductive layer 4 can comprise aluminum, copper, silver and/or any other conductive material, in particular a metal and/or a combination thereof. For instance, the conductive layer 4 can be printed on the bottom layer 3a using an ink with a conductive material, in particular an ink comprising silver or copper.

The structural layers 3a, 3b can be provided as a thin film surrounding or on top of a metal structure or layer. The film may comprise at least one of polypropylene, polyimide, polyethylene terephthalate, polyethylene naphthalate, polycarbonate or the like.

The thickness of the structural layers 3a, 3b reach from about 20 micrometers up to 500 micrometers, preferably between 30 micrometers and 50 micrometers. The thickness of the conductive layer 4 reach from about 1 micrometer up to 500 micrometers, preferably between 1 micrometer and 10 micrometers.

At least one embodiment may provide at least one of the following features and/or at least one of the following advantages:
- Easy and less cost-intensive manufacturing.
- Reduced construction space.
- Reliable operation,
- High integration level,
- Flexibility in terms of functionality

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Cell contacting system
- 2: Layer structure
- 3a, 3b: Structural layer
- 4: Conductive layer
- 5: Functional layer
- 6: Dielectric layer
- 7: Temperature sensing element
- 8: Signal conducting layer
- 10: Battery management system
- 20: Contacting region

- 100: Battery
- 110: Battery cell
- 200: Battery system

## Claims

1. Cell contacting system (1) for electrically contacting a plurality of battery cells (110) of a battery (100), comprising a layer structure (2), said layer structure (2) comprising
at least one structural layer (3a, 3b) for providing mechanical stability, and
at least one conductive layer (4) adapted to transport electric current from and/or to one or more battery cells (110),
**characterized in that**
at least one functional layer (5) is provided, said functional layer (5) providing at least one managing function for a battery management system (10) and/or a protection function for said battery management system (10) and/or for the cell contacting system (1).

2. Cell contacting system (1) according to claim 1, **characterized in that** said at least one functional layer (5) comprises at least one sensing element (7) for sensing a physical property, in particular temperature, pressure and/or voltage, and/or a conductive element for conducting electric signals and/or current.

3. Cell contacting system (1) according to claim 2, **characterized in that** said at least one sensing element (7) is connected via a signal conducting line (8) within said at least one functional layer (5).

4. Cell contacting system (1) according to one of the claims 1-3, **characterized in that** said at least one functional layer (5) comprises dielectric material and/or flame-retardant material and/or flame protection material.

5. Cell contacting system (1) according to one of the claims 1-4, **characterized in that** said at least one functional layer (5) is adapted to provide fluid channelling, in particular gas channelling.

6. Cell contacting system (1) according to one of the claims 1-5, **characterized in that** said at least one functional layer (5) is adapted to provide a fuse function, preferably for said at least one conductive layer (4), preferably comprising an SMD component and/or at least one thinner region within said at least one functional layer (5).

7. Cell contacting system (1) according to one of the claims 1-6, **characterized in that** a top and a bottom layer of the layer structure are provided as structural layers (3a, 3b).

8. Cell contacting system (1) according to one of the claims 1-7, **characterized in that** said at least one conductive layer (4) and said at least one functional layer (5), providing a managing function, in particular a monitoring function, are adjacent layers.

9. Cell contacting system (1) according to at least claim 4, **characterized in that** said at least one functional layer (5) comprising dielectric material and/or flame-retardant material and/or flame protection material is arranged on top of all other functional layers within the layer structure (2).

10. Cell contacting system (1) according to at least claim 9, **characterized in that** said dielectric material comprises at least one of polypropylene, polyimide, polyethylene terephthalate, polyethylene naphthalate, polycarbonate and/or that said flame-retardant material and/or flame protection material comprises at least one of mica, hydroxide-loaded plastic.

11. Cell contacting system (1) according to one of the claims 1-10, **characterized in that** said at least one conductive layer (4) comprises at least one of copper, aluminum, silver.

12. Cell contacting system (1) according to one of the claims 1-11, **characterized in that** the thickness of at least one structural layer (3a, 3b) is at least equal to the thickness of the conductive layer (4) and/or the functional layer (5), preferably having at least double thickness, preferably at least triple thickness.

13. Battery (100) comprising a cell contacting system (1) according to one of the claims 1-12.

14. Battery system (200), comprising a battery (100) according to claim 13 and a battery management system (10) connected to said at least one functional layer (5) of the cell contacting system (1) of said battery (100), preferably wherein said at least one functional layer (5) is used for balancing current from and/or to the battery management system (10).

15. Method for providing a cell contacting system (1) according to one of the claims 1-12, wherein at least one of the layers (3a, 3b, 4, 5, 6) of the layer structure (2) is provided by at least one of printing, lamination, etching, overmoulding, stamping.
